(19) **Europäisches Patentamt**
**European Patent Office**
**Office européen des brevets**

(11) **EP 4 776 343 A1**

(12) **EUROPEAN PATENT APPLICATION**

(43) Date of publication:
**15.07.2026 Bulletin 2026/29**

(21) Application number: **25151070.7**

(22) Date of filing: **09.01.2025**

(51) International Patent Classification (IPC):
**H01M 4/36** (2006.01)

(52) Cooperative Patent Classification (CPC):
**H01M 4/366; H01M 4/5825; H01M 10/0525;**
**H01M 10/0562;** H01M 2300/0068

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **AMG Lithium GmbH**
**65926 Frankfurt am Main (DE)**

(72) Inventors:
- **NICKEL, Vera**
  **35708 Haiger (DE)**
- **JOURDAN, Marc-André**
  **64545 Mörfelden-Walldorf (DE)**

- **GIRON, Florian**
  **63856 Bessenbach (DE)**
- **GABBEY, Christine**
  **35039 Marburg (DE)**
- **VITZE, Hannes**
  **65510 Idstein (DE)**
- **HARTNIG, Christoph**
  **63796 Kahl am Main (DE)**
- **RAMSEY, Christoph**
  **55218 Ingelheim am Rhein (DE)**

(74) Representative: **Weickmann & Weickmann**
**PartmbB**
**Postfach 860 820**
**81635 München (DE)**

(54) **CORE-SHELL COMPOSITE COMPRISING SOLID ELECTROLYTE**

(57) The present invention relates to a method for preparing a solid electrolyte, a solid electrolyte obtainable by said method and a core-shell composite comprising a cathode active material core and said solid electrolyte as a shell. It further relates to methods for producing the core-shell composite and the use of said core-shell composite and solid electrolyte, e.g. in electrochemical cells and capacitors, fuel cells, batteries, and sensors.

EP 4 776 343 A1

**Description**

The present invention relates to a method for preparing a solid electrolyte, a solid electrolyte obtainable by said method and a core-shell composite comprising a cathode active material core and said solid electrolyte as a shell. It further relates to methods for producing the core-shell composite and the use of said core-shell composite and solid electrolyte, e.g. in electrochemical cells and capacitors, fuel cells, batteries, and sensors.

Solid electrolytes provide highly mobile ions in an otherwise rigid crystal structure. They are particularly suitable for applications in batteries, fuel cells and sensors as their specific structure supersedes an additional liquid or membrane usually separating the electrodes. By this means, health and safety risks related to harmful or flammable organic liquid electrolytes are avoided. Moreover, it has been shown that solid electrolytes have excellent electrochemical properties such as high ionic conductivity and electrochemical stability. Thus, solid state batteries, particularly all-solid-state batteries promise to become the next major evolutionary step in battery technology.

A particularly relevant group of solid electrolytes for electrochemical storage devices are cationic solid electrolytes providing mobile lithium ions, such as lithium argyrodite type solid electrolytes, and particularly sulfidic lithium argyrodite type solid electrolytes. Due to their high ionic conductivity and easy processability, sulfidic solid electrolytes are regarded as the most promising class of materials among solid electrolytes.

A remaining challenge for solid-state batteries is ensuring proper contact of the active materials to the solid electrolyte, which must enable ionic conduction paths between electrode particles and the separator layer within an electrode structure. Such contact is critical to achieve the advantageous properties of a solid-state battery including increased surface loading and improved charging and discharging performance. In addition to achieving optimal contact, a further goal is to reduce non-active electrode components such as binders and additives or the solid electrolyte content itself. To achieve both goals, fine solid electrolyte powders can be incorporated into the electrode structure in the smallest possible quantities.

As a solution to the challenges described above, addition of further additives or binders to the electrode assembly has been described previously. For example, addition of polymers can improve contact formation of the electrolyte particles by improving their spreadability (Kang et al., J Electrochem Soc, 171(9), 090520).

However, in general, any addition of materials limits the performance of an electrode. For example, the presence of polymers with a low melting temperature may significantly reduce temperature and voltage stability. Moreover, any further addition of inactive materials to an electrode assembly lowers its degree of utilization and thus negatively affects performance of the electrochemical cell.

Alternatively, chemical or physical coating methods, such as chemical or physical vapor deposition (CVD / PVD), may be used to coat active materials with solid electrolytes. Hereby, particulate electrode powders may be coated with an electrolyte layer to yield core-shell assemblies. These methods are, however, often costly and require a complicated set-up (Hennerici et al., Adv Mater Technol 2024, 2400745).

Further, coatings may be applied to electrode materials through wet chemical processes such as dip coating, doctor blade coating or similar techniques (Rosero-Navarro et al., J Sol-Gel Sci Technol, (2019), 89(1), 303-309; Kim et al., J Mater Chem A, (2023), 11(38), 20549).

The drawback of using any solvent such as organic solvents or dispersants is that they must be removed completely from the resulting composite in a time-consuming process. Solvent removal is essential in this case, as solvent residues would heavily compromise performance of the electrode and thus of the cell (Ruhl et al., Adv Energy Sustainability Res (2021), 2, 2000077).

To achieve optimal connection between solid electrolyte powders and electrode materials, typically having average particle sizes of about 5-15 $\mu$m, the solid electrolyte powders may have average particle sizes of about 1 $\mu$m or even lower (Shi et al., Adv Energy Mater (2020) 10, 1902881). However, in energy-intensive micronization and coating processes, crystallinity is often lost, leading to loss of ionic conductivity and thus performance losses of the solid electrolyte (compare Kim et al., ACS Appl. Energy Mater (2022), 5(12), 15442-15451).

Huh et al. (Batteries Supercaps (2023), 6(4), e202300036) describe a production method for sulfidic solid electrolytes with particle sizes below 800 nm based on a system of two organic solvents. Other previously described methods, such as those described in WO 2020/153973 A1, use solvent-based production methods yielding finely particulate materials of around 1 $\mu$m.

WO 2023/053929 A1 and WO 2021/132537 A1 disclose different wet pulverization methods of sulfidic solid electrolytes in two or more organic solvents or dispersants.

As mentioned above, a significant drawback of any method using solvents or dispersants is that they must be removed completely to ensure sufficient performance of the cell, which is time-consuming and costly.

In contrast, Kim et al. (ACS Appl. Energy Mater. (2022), 5(12), 15442-15451) disclose a dry micronization method based on a spiral jet mill. However, the processed solid electrolyte is described to lose crystallinity and thus electrochemical performance during production, necessitating thermal post-processing which leads to further loss of ionic conductivity of the material.

Considering the above, there is an urgent need for new methods for producing solid electrolytes which overcome the drawbacks of the known processes and allow for the provision of improved solid electrolytes and improved composites of electrode materials with solid electrolytes.

Thus, the goal of the present invention is to provide an easy and cost-effective method for preparing a solid electrolyte which can form improved electrode composites without the need for solvents, additives or energy-intensive processing. This goal is surprisingly solved by the method of the invention described below, which yields solid electrolyte particles having a surprising and advantageous particle morphology providing optimal interactions with electrode active material.

Thus, in a first aspect, the present invention provides a method for preparing a solid electrolyte, comprising the steps of:

(i) providing a solid electrolyte material, in particular lithium argyrodite type solid electrolyte material, and
(ii) jet milling the solid electrolyte material.

The solid electrolyte material may be any known solid electrolyte material. Preferably, the solid electrolyte material is a lithium argyrodite type solid electrolyte material, more preferably a sulfidic lithium argyrodite type solid electrolyte material. Such materials are well known to the person skilled in the art.

Methods for producing the solid electrolyte material to be provided in step (i) are well known in the art. For example, preferred solid electrolytes and methods producing same are disclosed in WO 2021/058620 A1 and WO 2021/058621 A1.

In a preferred embodiment, the solid electrolyte material is a lithium argyrodite type solid electrolyte material which is represented by formula (I):

$$Li_{12-m-x}M^{m+}S_{6-x}X_x \qquad (I)$$

wherein

$M^{m+}$ is independently selected from $Si^{4+}$, $Ge^{4+}$, $Sn^{4+}$, $P^{5+}$, $As^{5+}$, $B^{3+}$, $Sn^{4+}$, $Ga^{3+}$, $Al^{3+}$ and $Sb^{5+}$, and is preferably $P^{5+}$,

$X$ is independently selected from group 17 elements, and is preferably Cl, Br or I, and $0 < x \leq 2$.

The stoichiometry of X may be $0 < x \leq 2$, preferably $0.5 < x \leq 1.7$, more preferably $x = 1.5$, with x being a positive rational number.

X is independently selected from group 17 elements (i.e. halogens), preferably from Cl, Br and I. In one embodiment, X is F or Cl or Br or I, preferably Cl or Br or I. In another embodiment, X is a mixture of at least two group 17 elements, such as a mixture of Cl and Br, Cl and I, or Br and I, with a ratio of element X1 to element X2 of 0.01:0.99 - 0.99:0.01, preferably 0.1:0.9 - 0.9-0.1, more preferably 0.3:0.7 - 0.7:0.3, such as $X_x=(X1_{x1}X2_{x2})$, with x1+x2=x, e.g. $Cl_{0.5}Br_{0.5}$ or $ClBr_{0.5}$. In this case, the compound of formula (I) is a mixed crystal.

$M^{m+}$ is preferably independently selected from $P^{5+}$, $As^{5+}$, $Ge^{4+}$, $Si^{4+}$, $B^{3+}$, $Sn^{4+}$, $Ga^{3+}$, $Al^{3+}$ and $Sb^{5+}$. In one embodiment, $M^{m+}$ is $P^{5+}$ or $As^{5+}$ or $Ge^{4+}$ or $Si^{4+}$ or $B^{3+}$ or $Sn^{4+}$ or $Ga^{3+}$ or $Al^{3+}$ or $Sb^{5+}$, preferably $P^{5+}$. In another embodiment, $M^{m+}$ is a mixture of at least two of $P^{5+}$, $As^{5+}$, $Ge^{4+}$, $Si^{4+}$, $B^{3+}$, $Sn^{4+}$, $Ga^{3+}$, $Al^{3+}$ and $Sb^{5+}$, such as a mixture of $P^{5+}$ and $As^{5+}$, or $P^{5+}$ and $Sb^{5+}$, preferably with a ratio of element M1 to element M2 of 0.01:0.99 - 0.99:0.01, preferably 0.1:0.9 - 0.9-0.1, more preferably 0.3:0.7 - 0.7:0.3.

In a preferred embodiment, the lithium argyrodite type solid electrolyte material is selected from $Li_{5.5}PS_{4.5}Cl_{1.5}$, $Li_{5.5}PS_{4.5}Br_{1.5}$, $Li_{5.5}PS_{4.5}I_{1.5}$ or mixed crystals thereof, or $Li_6PS_5Cl$, $Li_6PS_5Br$, $Li_6PS_5I$ or mixed crystals thereof. In a particularly preferred embodiment, the lithium argyrodite type solid electrolyte material is selected from $Li_{5.5}PS_{4.5}Cl_{1.5}$, $Li_{5.5}PS_{4.5}Br_{1.5}$ or $Li_{5.5}PS_{4.5}I_{1.5}$ or mixed crystals thereof. For example, the lithium argyrodite type solid electrolyte material may be a mixed crystal of the formula $Li_{5.5}PS_{4.5}Cl_{1.0}Br_{0.5}$.

The solid electrolyte material provided in step (i) of the method of the invention is preferably in a crystalline state, preferably having an argyrodite-like crystal structure (orthorhombic-pyramidal, space group F-43m). The atomic arrangement of the solid electrolyte may be detected by conventional means known in the art such as X-ray diffraction (XRD). Preferably, the method of the invention does not compromise the crystalline state of the solid electrolyte material. Thus, it is preferred that the product of the method of the invention, i.e., the solid electrolyte, has substantially the same, preferably the same crystal structure as the solid electrolyte material provided in step (i) of the method of the invention.

It is further preferred that the solid electrolyte material provided in step (i) has an ionic conductivity of 0.01-500 mS/cm, preferably 1-50 mS/cm at 20 °C. The ionic conductivity may be measured with methods known in the art, such as electrochemical impedance spectroscopy in a frequency range of around 5 MHz to 100 Hz.

The solid electrolyte material may further comprise at least one dopant. A dopant in the sense of the present invention is a supplementary element that is introduced into the solid electrolyte (crystal) structure e.g. to alter its electrical properties. The type of dopant as well as its concentration significantly influences the resulting material properties. Suitable cationic dopants are e.g. Mn, Ge, Sn, V, Ni, Cr, Si, Al, As, Se, O, Te, Mg, Na, Ca, Sb, B, Ga or a mixture thereof, in their respective oxidation state. Anionic doping agents may comprise $O^{2-}$, $S^{2-}$, $Te^{2-}$. Dopants selected from B, As, Se and Ni, in their respective oxidation state, are particularly beneficial for increasing the ionic conductivity or enable mixed electronic and ionic conduction. The dopant may be present in an amount of less than 10 wt.%, preferably 0.01-9.0 wt.%, more preferably 0.10-5.0 wt.%, with reference to the total weight of the solid electrolyte material.

In particular, the solid electrolyte used in step (i) is in granular form. The granules have a mean diameter of 1-200 μm measured with laser diffraction.

In step (ii) of the method of the invention, the solid electrolyte material as described above is jet milled. In jet milling, particles are ground by mutual collisions at high velocity, induced by a high-speed jet of compressed gas such as air or inert gas. Advantageously, jet mills can yield very narrow size distributions of output particles, and dry material can be processed without use of solvent. The output particle size of a jet mill is controlled via the grinding pressure, i.e., the inlet gas pressure, and the feed rate of particles into the jet mill. In typical jet mill systems, particles are fed into the grinding chamber via a venturi nozzle or similar systems, and the feed rate is tuned by the feeding pressure, e.g., the pressure of gas applied to the venturi nozzle. Preferably, jet milling in step (ii) is performed in a spiral jet mill. Jet mills and spiral jet mills are well known to one skilled in the art and available commercially in various dimensions, which may be chosen depending on the desired throughput. The method of the invention is not particularly limited to any model of jet mills, as the inventors have successfully performed the method in different commercially available jet mills.

It is preferred that jet milling in step (ii) is performed at feeding and/or grinding pressures of > 5 bar, preferably of > 6 bar, more preferably of 7-12 bar. Preferably, jet milling in step (ii) is performed at feeding and grinding pressures of > 5 bar, preferably of > 6 bar, more preferably of 7-12 bar. Jet milling may be performed with any inert and dry gas suitable for jet milling, preferably with nitrogen, argon or dry air.

The method of the invention is preferably solvent-free. Thus, it is preferred that no solvent is used in steps (i) and (ii).

Preferably, jet milling in step (ii) micronizes the solid electrolyte material to obtain nanosized particles.

The solid electrolyte obtainable by the method of the invention is preferably present in the form of platelets.

As used herein, the term "platelet" refers to three-dimensional objects which are substantially smaller in one dimension than in the other two dimensions, thereby forming a main surface by the other two dimensions. The platelets are preferably flat but may also be slightly bent or curved. At each point of the platelet, the thickness is measured orthogonally to the main surface, and the maximum thickness of a platelet is the maximum value of thickness values measured across the whole platelet. The maximum diameter of a platelet corresponds to its maximum extension. Preferably, the direction of the maximum diameter lies in the plane of the platelet. Within the plane, the main surface of the platelets may take various two-dimensional shapes which are not particularly limited, i.e., it may be hexagonal, elongated hexagonal, polygonal or any other symmetric or asymmetric two-dimensional shape. It is preferred that the minimum extension of the platelet in the platelet plane, i.e., the minimum extension of the main surface, is still substantially larger than the thickness of the platelet, distinguishing the platelet shape from e.g. a needle shape.

In particular, the solid electrolyte of the invention is preferably present in the form of platelets, wherein the platelets particularly have a mean maximum diameter of 200-1200 nm, more preferably of 400-1000 nm, and/or a mean maximum thickness of 50-500 nm, more preferably of 100-350 nm. Preferably, the platelets have a mean maximum diameter of 200-1200 nm, more preferably of 400-1000 nm, and a mean maximum thickness of 50-500 nm, more preferably of 100-350 nm. The mean dimensions of the platelets may be determined through scanning electron microscopy (SEM), by recording images of multiple particles, measuring the accessible dimensions and averaging the respective values.

As used herein, "mean" dimensions refer to the mean values in the population of particles, while maximum diameter and maximum thickness refer to the maximum diameter and thickness of each particle. Thus, the mean maximum diameter is the mean value of the maximum diameters measured for each particle in the population. Analogously, the mean maximum thickness is the mean value of the maximum thicknesses measured for each particle in the population.

It is preferred that the platelet-shaped particles are relatively uniform with narrow distributions of particle dimensions. Thus, it is preferred that 60-100%, preferably 80-100% of the platelets have a maximum thickness of 50-500 nm, preferably 100-350 nm. Preferably, 60-100%, more preferably 80-100% of the platelets have a maximum diameter of 200-1200 nm, preferably of 400-1000 nm. Preferably, 60-100%, more preferably 80-100% of the platelets have a maximum thickness of 50-500 nm, preferably 100-350 nm, and a maximum diameter of 200-1200 nm, preferably of 400-1000 nm.

Preferably, the mean aspect ratio of the platelets is from 2:1 to 20:1, more preferably from 5:1 to 20:1, wherein the aspect ratio is defined as the ratio of the maximum diameter to the maximum thickness of each platelet. It is further preferred that 60-100%, preferably 80-100% of the platelets have an aspect ratio of 2:1 to 20:1, more preferably of 5:1 to 20:1.

It is further preferred that the mean ratio of the minimum diameter of the platelet within the main surface to the maximum thickness of the platelet is from 2:1 to 20:1. The mean ratio of the minimum diameter of the platelet within the main surface to the maximum diameter of the platelet is preferably from 1:10 to 1:1, more preferably from 1:5 to 1:1. In a preferred embodiment, 60-100%, more preferably 80-100% of the platelets have a ratio of the minimum diameter within the main surface to the maximum thickness of the platelet of 2:1 to 20:1 and a ratio of the maximum diameter within the main surface to the maximum thickness of the platelet of 2:1 to 20:1.

As shown in the examples below, the inventors have surprisingly found that the solid electrolyte of the invention obtained and characterized as described above maintains its intrinsic high ionic conductivity while having an advantageous morphology for use as a solid electrolyte. Preferably, the solid electrolyte has an ionic conductivity of 0.01-500 mS/cm, preferably 1-50 mS/cm at 20°C. It is further preferred that the difference between the ionic conductivity of the starting solid electrolyte material and the resulting solid electrolyte is less than 1 mS/cm, preferably less than 0.2 mS/cm.

In a further aspect, the present invention provides a solid electrolyte obtainable by the method of the invention as described above.

The inventors have surprisingly found that controlled grinding of solid electrolyte material using the method of the invention as disclosed above yields an unexpected, but highly favorable particle morphology. By jet milling the solid electrolyte material, nanoscale platelet-shaped solid electrolyte particles are unexpectedly obtained which surprisingly adhere to and arrange around electrode active material through non-covalent interactions, even in the absence of any additives or binder material. Notably, ionic conductivity of the particles is not compromised by the method of the invention.

The method of the invention yields particularly advantageous solid electrolytes when applied to lithium argyrodite type solid electrolyte material, particularly sulfidic lithium argyrodite type solid electrolyte material as defined above.

The solid electrolyte obtained by the method of the invention may be used directly, without the necessity for any further processing such as drying, sintering or similar. Accordingly, in a preferred embodiment, the method of the invention consists of steps (i) and (ii) as described above and thus constitutes an easy and cost-effective one-step process of preparing a solid electrolyte with surprising and advantageous properties, as described above and below.

A further aspect of the invention is the use of a solid electrolyte of the invention as described above in an electrochemical cell, capacitor, fuel cell, battery, or sensor. Use of the solid electrolyte of the invention in an all-solid-state battery is particularly preferred. Still a further aspect of the invention relates to an electrochemical cell comprising a solid electrolyte as described above.

In a further aspect, the present invention provides a core-shell composite comprising

- a core comprising at least one cathode active material and
- a shell comprising the solid electrolyte of the invention as described above.

The cathode active material may be any suitable cathode active material. Preferably, the cathode active material is selected from lithium nickel manganese cobalt oxides (NMC), lithium iron phosphate (LFP), lithium nickel cobalt aluminum oxides (NCA), lithium manganese iron phosphate (LMFP) and mixtures thereof.

Lithium nickel manganese cobalt oxides, generally referred to as NMC, are mixed oxides corresponding to the general formula $LiNi_xMn_yCo_{1-x-y}O_2$, wherein x and y are positive real numbers and 1-x-y > 0. Preferred NMC materials include NMC811 ($LiNi_{0.8}Mn_{0.1}Co_{0.1}O_2$), NMC622 ($LiNi_{0.6}Mn_{0.2}Co_{0.2}O_2$) and NMC111 ($LiNi_{0.33}Mn_{0.33}Co_{0.33}O_2$).

Lithium nickel cobalt aluminum oxides, generally referred to as NCA, are mixed oxides corresponding to the general formula $LiNi_xCo_yAl_zO_2$, wherein x, y and z are positive real numbers and x+y+z=1. A preferred NCA cathode active material has the formula $Li\ Ni_{0.8}Co_{0.15}Al_{0.05}O_2$.

Lithium iron phosphate (LFP) is a further well-established cathode active material having the formula $LiFePO_4$.

Lithium manganese iron phosphate, generally referred to as LMFP, can be regarded as Mn-doped LFP and has the general formula $LiMn_yFe_{1-y}PO_4$, with 0 < y < 1. Compared to LFP, LMFP has been shown to reach a higher energy density and operating voltage.

The core of the core-shell composite comprising the cathode active material preferably has a roughly globular shape. In a preferred embodiment, the core has a roughly spheroid shape, more preferably a near-spherical or spherical shape. Preferably, the mean particle size of the core, i.e. the mean diameter of particles, is from 2-20 μm according to laser diffraction data. Preferably, the particle size distribution d50-values range from 7-15 μm.

In a preferred embodiment, the core consists of at least one cathode active material as defined above. In a particularly preferred embodiment, the core consists of one cathode active material as defined above, particularly of a cathode active material selected from NMC, NCA, LFP and LMFP.

The shell of the core-shell composite comprises the solid electrolyte of the invention, which is preferably present in the form of platelets as described above. Preferably, the main surface of the solid electrolyte platelet is tangentially arranged on the surface of the core.

Without wishing to be bound by a theory, it is assumed that the solid electrolyte of the invention adheres to and arranges around the core by non-covalent interactions such as van der Waals forces and/or ionic interactions.

It is preferred that the shell of the core-shell composite consists of the solid electrolyte of the invention as described above.

It is preferred that the core is covered completely by solid electrolyte shell material. Preferably, the core-shell composite has a globular shape, more preferably a near-spherical or spherical shape, and has a mean diameter of around 2-20 $\mu$m.

In a preferred embodiment, the core-shell composite of the invention is free of binders, solvents and/or additives. In a particularly preferred embodiment, the core-shell composite is free of binders, solvents and additives.

In a particularly preferred embodiment, the core-shell composite of the invention consists of

- a core consisting of at least one cathode active material, preferably consisting of one cathode active material as described above, and
- a shell consisting of the solid electrolyte of the invention as described above.

In a further aspect, the present invention provides a method for preparing a core-shell composite of the invention as described above, comprising the steps of

(a) providing a cathode active material, preferably NMC or LFP,
(b) providing a solid electrolyte of the invention as described above, and
(c) combining the cathode active material and the solid electrolyte by low-energy mixing, stirring or grinding.

In another aspect, the present invention relates to a core-shell composite obtainable by the above method. The core-shell composite is preferably characterized as described above.

Preferably, the cathode active material is provided in step (a) in the form of a powder with a mean particle size of 2-20 $\mu$m, as measured by laser diffraction. In a preferred embodiment, the cathode active material in (a) and the solid electrolyte in (b) are provided with a relative weight ratio of 1:2 to 2:1.

Preferably, no binders, solvents or additives are used in any steps of the method. Thus, the materials are preferably combined in dry form in step (c). The inventors have surprisingly found that the cathode active materials and solid electrolytes self-assemble into the core-shell particles upon dry low-energy mixing, stirring or grinding. Thus, energy-intensive, complicated and costly coating methods can be avoided, and cheap and easy mixing methods can be used instead.

Any low-energy mixing, stirring or grinding method suitable for processing dry powderous material may be used in step (c). In a preferred embodiment, the materials may be mixed with beads, such as glass beads with a suitable diameter for the mixing volume, in a suitable container, and agitated with an appropriate speed and for an appropriate time to ensure complete mixing on a mixing device, such as an agitating mixer, e.g. a roller mixer or disperser. Exemplary protocols for low-energy mixing are provided in the Examples.

The core-shell composite of the invention offers multiple advantages as a cathode active material. As described above, preparation of both the solid electrolyte and the core-shell composite is easy and cost-effective. The core-shell configuration allows optimal contact between the cathode material and solid electrolyte platelets. No binders, additives or solvents are necessary, thus improving performance and resulting in a versatile use of the electrode material. Further, given the globular and ideally near-spherical shape of the core-shell composites, spatial utilization in the electrode is improved. Advantageously, as the cathode material cores covered with solid electrolyte platelets can be packed more densely, higher electrode loads can be achieved while maintaining the same performance.

Thus, a further aspect of the invention relates to the use of a core-shell composite of the invention as cathode composite material in an electrochemical cell, preferably in an all-solid-state battery. In a still further aspect, the present invention relates to an electrochemical cell comprising the core-shell composite of the invention, preferably comprising the core-shell composite as cathode composite material.

The present invention shall be further illustrated in more detail but not limited by the following figures and examples.

## Brief description of the drawings

**Fig. 1:**  SEM secondary electron images of solid electrolyte platelets prepared by the method of the invention, (a) Overview image, scale bar 4.0 $\mu$m; (b) Close-up image, scale bar 2.00 $\mu$m. Selected measurement results for the lateral extension / diameter and thickness of platelets are indicated in the image.

**Fig. 2:** Nyquist plot of impedance spectra of $Li_6PS_5Cl$ before (light grey squares, particle size > 1$\mu$m) and after processing by jet milling (dark grey diamonds, particle size < 1$\mu$m).

**Fig. 3:** SEM secondary electron image of a core-shell composite prepared in a roller mixer as described in Example 2a. Scale bar: 10.0 $\mu$m.

**Fig. 4:** SEM secondary electron image of a core-shell composite prepared in a disperser as described in Example 2b. Scale bar: 5.0 $\mu$m.

## Examples

### Example 1

100 grams of solid electrolyte with the composition $Li_6PS_5Cl$ (own production) were fed into a jet mill (*DEC Group, DecJet50*) via a screw conveyor and ground in a nitrogen stream, using the following grinding parameters: Venturi nozzle insertion depth 8 mm, p(Venturi) = 9 bar (feeding pressure), p(ring) = 8 bar (grinding pressure).

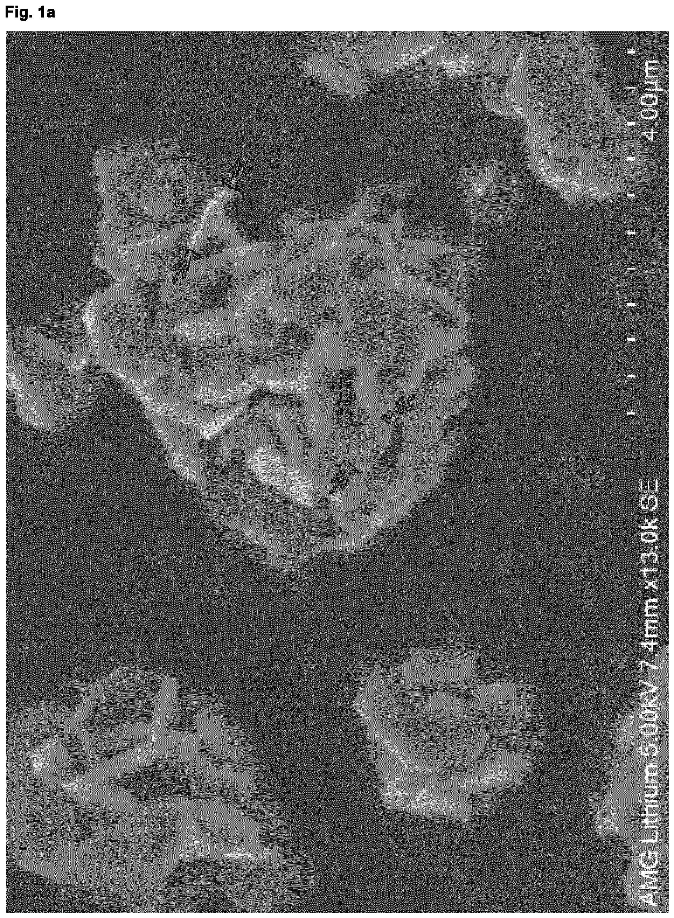

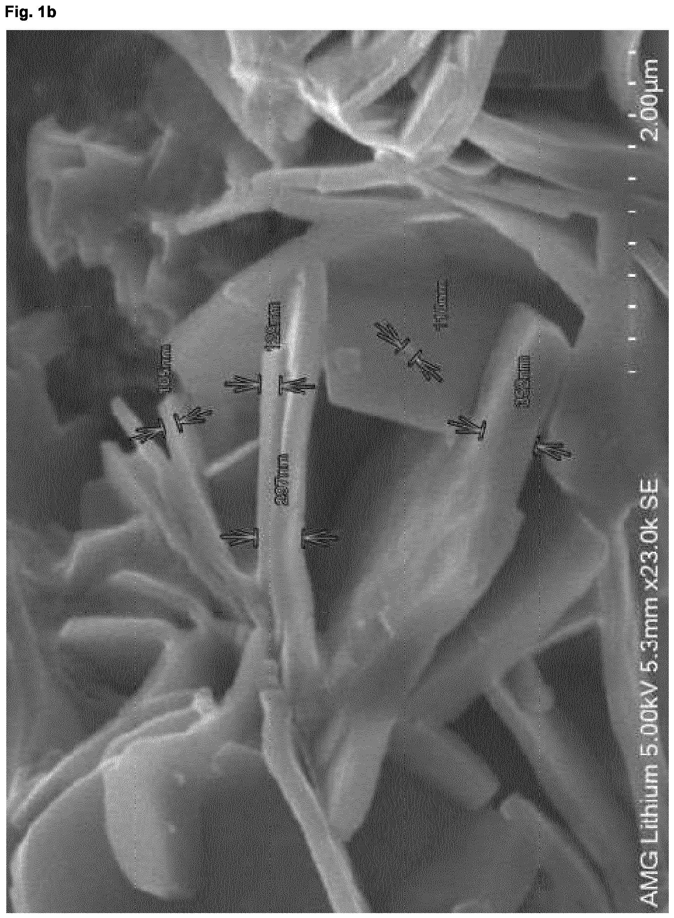

The resulting nanoscale solid electrolyte powder was examined by scanning electron microscopy (SEM) before and after micronization. To this end, a few milligrams of solid electrolyte were applied to a sample carrier and introduced directly into the sample chamber of a scanning electron microscope (*Hitachi FlexSEM1000II*), avoiding contact with air. The images were recorded at an acceleration voltage of 5 kV under variable magnification with a secondary electron detector. Two exemplary images are shown in Fig. 1a and 1b, with exemplary measurements of the lateral extension/ diameter and thickness of platelets indicated in the image.

In addition, the solid electrolyte powders were tested for ionic conductivity before and after micronization using impedance spectroscopy. To this end, small amounts of powder (m(untreated solid electrolyte)= 207mg, m(milled solid electrolyte)=194mg) were weighed into a pressure and temperature measuring cell (*rhd instruments, CompreCell 12-DP*) with stainless steel stamps.

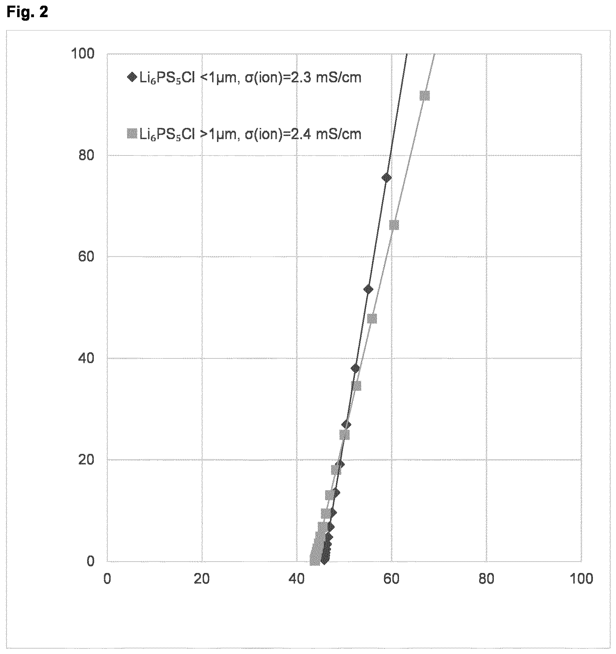

In an automated test station (*rhd instruments, CompreDrive*), the solid electrolyte samples were pre-pressed at 600 MPa and then examined at a test pressure of 5 MPa at 20°C. A frequency range of 5 MHz to 100 Hz was measured with an excitation voltage of 10 mV (*Biologic, SP-300 potentiostat*). The impedance spectra were analyzed using RelaxIS3 software (*rhd instruments*) and are shown in Fig. 2. The ionic conductivity was determined as 2.4 mS/cm for the untreated solid electrolyte sample, and 2.3 mS/cm for the milled solid electrolyte.

As demonstrated in this Example, jet milling of solid electrolyte material according to the method of the invention yields particles with a surprising and consistent platelet morphology while maintaining ionic conductivity of the solid electrolyte.

### Example 2

0.4 grams of nanoscale solid electrolyte from Example 1 were mixed with 0.4 grams of NMC powder (*lithium nickel manganese cobalt oxide, in this* case: $LiNi_{0.8}Mn_{0.1}Co_{0.1}O_2$, *mean particle size 10$\mu$m*) in a glass vessel and 11.2 grams of glass beads (diameter 6 mm) were added. This mixture was agitated for 60 minutes on a roll mixer (*Phoenix Instruments RS-TR10*) at 70 revolutions per minute (rpm).

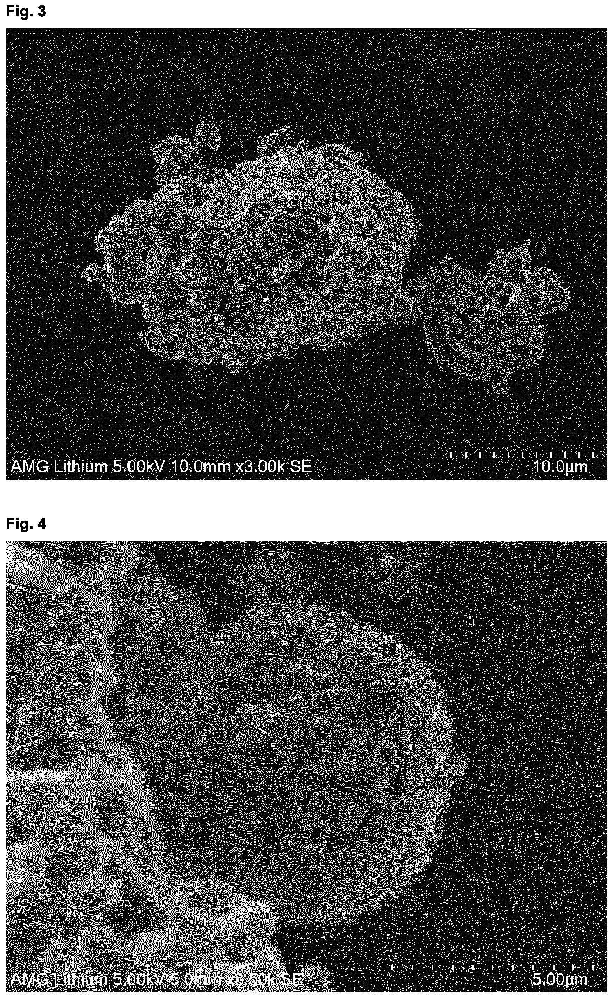

The composite obtained was examined using a scanning electron microscope. To this end, a few milligrams of the composite were applied to a sample carrier and introduced directly into the sample chamber of the scanning electron microscope (*Hitachi FlexSEM1000II*), avoiding contact with air. The images were taken at variable magnifications using an acceleration voltage of 5 kV and a secondary electron detector. An exemplary resulting image is shown in Fig. 3.

### Example 3

0.5 grams of nanoscale solid electrolyte from Example 1 were mixed with 0.4 grams of NMC powder (lithium nickel manganese cobalt oxide, *in this* case: $LiNi_{0.8}Mn_{0.1}Co_{0.1}O_2$, *mean particle size 10$\mu$m*) in a polypropylene ball milling tube (IKA) and 6 grams of glass beads (diameter 6 mm) were added. This mixture was agitated for five minutes at 8000 revolutions per minute (rpm) in a disperser (*IKA ULTRA TURRAX Tube Drive P control*).

The composite obtained was examined using a scanning electron microscope. A few milligrams of the composite were applied to a sample carrier and introduced directly into the sample chamber of the microscope (*Hitachi FlexSEM10000II*), avoiding contact with air. The images were taken at variable magnifications using an acceleration voltage of 5 kV and a secondary electron detector. An exemplary resulting image is shown in Fig. 4.

The present invention covers the following items:

1. A method for preparing a solid electrolyte, comprising the steps of:

(i) providing a solid electrolyte material, in particular lithium argyrodite type solid electrolyte material, and
(ii) jet milling the solid electrolyte material.

2. The method of item 1, wherein the lithium argyrodite type solid electrolyte material is represented by formula (I):

$$Li_{12-m-x}M^{m+}S_{6-x}X_x \qquad (I)$$

wherein

$M^{m+}$ is independently selected from $Si^{4+}$, $Ge^{4+}$, $Sn^{4+}$, $P^{5+}$, $As^{5+}$, $B^{3+}$, $Sn^{4+}$, $Ga^{3+}$, $Al^{3+}$ and $Sb^{5+}$, and is preferably $P^{5+}$,

X is independently selected from group 17 elements, and is preferably Cl, Br or I, and $0 < x \leq 2$.

3. The method of item 1 or 2, wherein the lithium argyrodite type solid electrolyte material is selected from $Li_{5.5}PS_{4.5}Cl_{1.5}$, $Li_{5.5}PS_{4.5}Br_{1.5}$ or $Li_{5.5}PS_{4.5}I_{1.5}$ or mixed crystals thereof.

4. The method of any one of the preceding items, wherein step (ii) is performed in a spiral jet mill.

5. The method of any one of the preceding items, wherein jet milling in step (ii) is performed at feeding and/or grinding pressures of > 5 bar, preferably of > 6 bar, more preferably of 7-12 bar, preferably wherein step (ii) is performed at feeding and grinding pressures of > 5 bar, more preferably of > 6 bar, even more preferably of 7-12 bar.

6. The method of any one of the preceding items, wherein the solid electrolyte material is micronized in step (ii) to obtain nanosized particles.

7. The method of any one of the preceding items, wherein lithium argyrodite sulfidic solid electrolyte material is micronized in a spiral jet mill at feeding and/or grinding pressures above 5 bar, preferably at feeding and grinding pressures above 5 bar, to obtain nanosized particles.

8. The method of any one of the preceding items, which is solvent-free.

9. A solid electrolyte obtainable by the method according to any one of the preceding items.

10. The solid electrolyte according to item 9, which is present in the form of platelets, wherein the platelets particularly have a mean maximum diameter of 200-1200 nm, preferably of 400-1000 nm, and/or a mean maximum thickness of 50-500 nm, preferably of 100-350 nm.

11. The solid electrolyte according to item 10, wherein 60-100%, preferably 80-100% of the platelets have a maximum diameter of 200-1200 nm, preferably of 400-1000 nm, and/or a maximum thickness of 50-500 nm, preferably 100-350 nm.

12. The solid electrolyte according to item 10 or 11, wherein the mean aspect ratio of the platelets is from 2:1 to 20:1, preferably from 5:1 to 20:1, wherein the aspect ratio is defined as the ratio of the maximum diameter to the maximum thickness of the platelets.

13. The solid electrolyte according to any one of items 10-12, wherein 60-100%, preferably 80-100% of the platelets have an aspect ratio of 2:1 to 20:1, preferably from 5:1 to 20:1, wherein the aspect ratio is defined as the ratio of the maximum diameter to the maximum thickness of the platelets.

14. The solid electrolyte according to any one of items 9-13, having an ionic conductivity of 0.01-500 mS/cm, preferably 1-50 mS/cm at 20°C.

15. Use of a solid electrolyte according to any one of items 9-14 in an electrochemical cell or capacitor, a fuel cell, a battery, or a sensor.

16. Use of a solid electrolyte according to item 15 in an all-solid-state battery.

17. An electrochemical cell comprising the solid electrolyte according to any one of items 9-14.

18. A core-shell composite comprising

- a core comprising at least one cathode active material and
- a shell comprising the solid electrolyte according to any one of items 9-14.

19. The core-shell composite according to item 18, wherein the cathode active material is selected from lithium nickel manganese cobalt oxides (NMC), lithium iron phosphate (LFP), lithium nickel cobalt aluminum oxides (NCA), lithium manganese iron phosphate (LMFP) and mixtures thereof.

20. The core-shell composite according to item 18 or 19, wherein the mean particle size of the core is from 2-20 $\mu$m as measured with laser diffraction data, and/or wherein the particle size distribution d50-values of the core range from 7-15 $\mu$m.

21. The core-shell composite according to any one of items 18-20, wherein the major surface of the solid electrolyte in form of a platelet is tangentially arranged on the surface of the core.

22. The core-shell composite according to any one of items 18-21, which is free of binders, solvents and/or additives.

23. The core-shell composite according to any one of items 18-22, which consists of a core consisting of at least one cathode active material, and a shell consisting of the solid electrolyte according to any one of items 9-14.

24. A method for preparing a core-shell composite according to any one of items 18-23, comprising the steps of

(a) providing a cathode active material, preferably NMC or LFP,
(b) providing a solid electrolyte according to any one of items 9-14, and
(c) combining the cathode active material and the solid electrolyte by low-energy mixing, stirring or grinding.

25. A core-shell composite obtainable by the method according to item 24.

26. Use of a core-shell composite according to any one of items 18-23 or 25 as cathode composite material in an electrochemical cell, preferably in an all-solid-state battery.

27. An electrochemical cell comprising the core-shell composite according to any one of items 18-23 or 25.

**Claims**

1. A method for preparing a solid electrolyte, comprising the steps of:

(i) providing a solid electrolyte material, in particular lithium argyrodite type solid electrolyte material, and
(ii) jet milling the solid electrolyte material.

2. The method of claim 1, wherein the lithium argyrodite type solid electrolyte material is represented by formula (I):

$$Li_{12-m-x}M^{m+}S_{6-x}X_x \qquad (I)$$

wherein

$M^{m+}$ is independently selected from $Si^{4+}$, $Ge^{4+}$, $Sn^{4+}$, $P^{5+}$, $As^{5+}$, $B^{3+}$, $Sn^{4+}$, $Ga^{3+}$, $Al^{3+}$ and $Sb^{5+}$, and is preferably $P^{5+}$,
X is independently selected from group 17 elements, and is preferably Cl, Br or I, and

$$0 < x \leq 2,$$

preferably wherein the lithium argyrodite type solid electrolyte material is selected from $Li_{5.5}PS_{4.5}Cl_{1.5}$, $Li_{5.5}PS_{4.5}Br_{1.5}$ or $Li_{5.5}PS_{4.5}I_{1.5}$ or mixed crystals thereof.

3. The method of any one of the preceding claims, wherein step (ii) is performed in a spiral jet mill, and/or wherein jet milling in step (ii) is performed at feeding and/or grinding pressures of > 5 bar, preferably of > 6 bar, more preferably of 7-12 bar.

4. The method of any one of the preceding claims, wherein the solid electrolyte material is micronized in step (ii) to obtain nanosized particles, and/or wherein the method is solvent-free.

5. A solid electrolyte obtainable by the method according to any one of the preceding claims.

6. The solid electrolyte according to claim 5, which is present in the form of platelets, wherein the platelets particularly have a mean maximum diameter of 200-1200 nm, preferably of 400-1000 nm and/or a mean maximum thickness of 50-500 nm, preferably of 100-350 nm.

7. The solid electrolyte according to claim 6, wherein the mean aspect ratio of the platelets is from 2:1 to 20:1, preferably from 5:1 to 20:1, wherein the aspect ratio is defined as the ratio of the maximum diameter to the maximum thickness of the platelets.

8. Use of a solid electrolyte according to any one of claims 5-7 in an electrochemical cell or capacitator, a fuel cell, a battery, or a sensor, preferably in an all-solid-state battery.

9. A core-shell composite comprising

   - a core comprising at least one cathode active material and
   - a shell comprising the solid electrolyte according to any one of claims 5-7.

10. The core-shell composite according to claim 9, wherein the cathode active material is selected from lithium nickel manganese cobalt oxides (NMC), lithium iron phosphate (LFP), lithium nickel cobalt aluminium oxides (NCA), lithium manganese iron phosphate (LMFP) and mixtures thereof.

11. The core-shell composite according to claim 9 or 10, wherein the major surface of the solid electrolyte in form of a platelet is tangentially arranged on the surface of the core, and/or wherein the core-shell composite is free of binders, solvents and/or additives.

12. A method for preparing a core-shell composite according to any one of claims 9-11, comprising the steps of

   (a) providing a cathode active material, preferably NMC or LFP,
   (b) providing a solid electrolyte according to any one of claims 5-7, and
   (c) combining the cathode active material and the solid electrolyte by low-energy mixing, stirring or grinding.

13. A core-shell composite obtainable by the method according to claim 12.

14. Use of a core-shell composite according to any one of claims 9-11 or 13 as cathode composite material in an electrochemical cell, preferably in an all-solid-state battery.

15. An electrochemical cell comprising the solid electrolyte according to any one of claims 5-7 and/or comprising the core-shell composite according to any one of claims 9-11 or 13.

**Fig. 1a**

**Fig. 1b**

**Fig. 2**

**Fig. 3**

AMG Lithium 5.00kV 10.0mm x3.00k SE          10.0µm

**Fig. 4**

AMG Lithium 5.00kV 5.0mm x8.50k SE          5.00µm

Europäisches
Patentamt

European
Patent Office

Office européen
des brevets

# EUROPEAN SEARCH REPORT

**Application Number**

EP 25 15 1070

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/234807 A1 (OMORI NORIFUMI [JP] ET AL) 11 July 2024 (2024-07-11) * paragraphs [0003], [0011], [0024] - [0027], [0058], [0067] - [0068], [0071] * ----- | 1-8,15 | INV. H01M4/36 |
| X | US 2024/332524 A1 (YI EONGYU [US] ET AL) 3 October 2024 (2024-10-03) * paragraphs [0003], [0020], [0038]; claim 1; figures * ----- | 5-14 | |

**TECHNICAL FIELDS SEARCHED (IPC)**

H01M

The present search report has been drawn up for all claims

| Place of search | Date of completion of the search | Examiner |
|---|---|---|
| Munich | 25 June 2025 | Pöll, Andreas |

## ANNEX TO THE EUROPEAN SEARCH REPORT
## ON EUROPEAN PATENT APPLICATION NO.

EP 25 15 1070

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | Publication date | Patent family member(s) | | Publication date |
|---|---|---|---|---|
| US 2024234807 A1 | 11-07-2024 | CN | 118043917 A | 14-05-2024 |
| | | EP | 4411758 A1 | 07-08-2024 |
| | | JP WO2023053978 A1 | | 06-04-2023 |
| | | KR | 20240070545 A | 21-05-2024 |
| | | US | 2024234807 A1 | 11-07-2024 |
| | | WO | 2023053978 A1 | 06-04-2023 |
| US 2024332524 A1 | 03-10-2024 | NONE | | |

EPO FORM P0459

For more details about this annex : see Official Journal of the European Patent Office, No. 12/82

## REFERENCES CITED IN THE DESCRIPTION

**Patent documents cited in the description**

- WO 2020153973 A1
- WO 2023053929 A1
- WO 2021132537 A1
- WO 2021058620 A1
- WO 2021058621 A1

**Non-patent literature cited in the description**

- **KANG et al.** *J Electrochem Soc*, vol. 171 (9), 090520
- **HENNERICI et al.** *Adv Mater Technol*, 2024, 2400745
- **ROSERO-NAVARRO et al.** *J Sol-Gel Sci Technol*, 2019, vol. 89 (1), 303-309
- **KIM et al.** *J Mater Chem A*, 2023, vol. 11 (38), 20549
- **RUHL et al.** *Adv Energy Sustainability Res*, 2021, vol. 2, 2000077
- **SHI et al.** *Adv Energy Mater*, 2020, vol. 10, 1902881
- **KIM et al.** *ACS Appl. Energy Mater*, 2022, vol. 5 (12), 15442-15451
- **HUH et al.** *Batteries Supercaps*, 2023, vol. 6 (4), e202300036
- **KIM et al.** *ACS Appl. Energy Mater.*, 2022, vol. 5 (12), 15442-15451